# EUROPÄISCHE PATENTSCHRIFT

(11) **EP 2 861 864 B1**
(45) Veröffentlichungstag und Bekanntmachung des Hinweises auf die Patenterteilung: **30.11.2016**
(21) Anmeldenummer: 13734356.2
(22) Anmeldetag: 19.06.2013
(51) Int. Cl.: F03B 3/04, F03B 13/10

(54) **UNTERWASSERTURBINE MIT KORROSIONSSCHUTZVORRICHTUNG**
UNDERWATER TURBINE COMPRISING AN ANTI-CORROSION DEVICE
TURBINE SOUS-MARINE À DISPOSITIF DE PROTECTION ANTICORROSION

(30) Priorität: 19.06.2012 DE 102012105336
(43) Veröffentlichungstag der Anmeldung: 22.04.2015
(73) Patentinhaber: Fella Maschinenbau GmbH, 63916 Amorbach (DE)
(72) Erfinder: FELLA, Günter, 63916 Amorbach (DE)
(74) Vertreter: Geirhos, Johann
(86) Internationale Anmeldenummer: PCT/EP2013/062793
(87) Internationale Veröffentlichungsnummer: WO 2013/190008

(56) Entgegenhaltungen:
- DE-A1-102006 043 946
- GB-A- 2 032 008
- JP-A- S58 195 075
- US-A- 3 256 828
- US-A- 3 746 472

## Beschreibung

Die Erfindung betrifft eine Unterwasserturbine mit einer Korrosionsschutzvorrichtung. Insbesondere betrifft die Erfindung eine Unterwasserturbine mit einem Gehäuse, in dem ein Generator angeordnet ist, mit einer Welle, die den Generator mit einem Turbinenlaufrad verbindet, wobei die Welle unter einem Winkel gegenüber der Horizontalen angeordnet ist und die Welle nach unten aus dem Gehäuse durch eine Wellenöffnung heraus geführt ist, so dass ein Eindringen des Wassers in das Gehäuse durch ein in dem Gehäuse komprimiertes Gasvolumen verhindert wird.

Im Stand der Technik sind vollständig unter Wasser angeordnete Turbinen bekannt. Solche Unterwasserturbinen kommen vor allem dann zum Einsatz, wenn aus Gründen des Landschaftsschutzes oder der optischen Anpassung an die Umgebung auffällige und größere Kraftwerksbauten vermieden werden sollen. Insbesondere können durch Unterwasserturbinen auch Stauschwellen und Sperrwerke, die bisher nicht mit einem Kraftwerk ausgestattet sind, für die Energiegewinnung in einem kleineren und mittleren Leistungsbereich genutzt werden. Dabei können in einem Oberwasser Unterwasserturbinen angeordnet werden, ohne wie bei einem herkömmlichen Kraftwerk ein Generatorhaus vorzusehen, in dem die Generatoren angeordnet sind, die über Wellen mit darunterliegenden Turbinen verbunden sind. Die Unterwasserturbine liegt dabei vor einer Stauvorrichtung vollständig unter der Wasseroberfläche und neben der optischen Unauffälligkeit werden auch Betriebsgeräusche durch die Generatoren wie auch die mechanische Lagerung der Turbine selbst sowie die Turbine durch das umgebende Wasser gedämpft.

Bekannt sind dabei zwei Arten von Unterwasserturbinen, zum einen liegend angeordnete, bei denen eine sich drehende Welle im Wesentlichen horizontal angeordnet ist, und senkrecht angeordnete Unterwasserturbinen, mit einer senkrechten Orientierung der Turbinen- bzw. Generatorwelle.

Bei beiden Arten von Unterwasserturbinen besteht das Problem einer drehenden Abdichtung des Gehäuseinneren an der Wellendurchführung, um einen Kontakt der Leistungselektronik sowie des Generators mit dem Wasser zu vermeiden. Bei vertikal angeordneten Unterwasserturbinen ist bekannt, eine nicht abgedichtete Wellendurchführung vorzusehen, durch die die Welle zwischen Generator und Turbine, bzw. genauer einem Turbinenlaufrad aus dem Gehäuse herausgeführt wird, und das Gehäuse gasdicht auszuführen, so dass das eingeschlossene Gas durch den Wasserdruck komprimiert wird und sich an der Unterseite des Gehäuses ein Wasserspiegel ausbildet, jedoch der Bereich oberhalb des Wasserspiegels in dem Gehäuse trocken bleibt, in dem sich der Generator, Lagerung sowie eventuell Elektronik befinden.

Durch die hohen Strömungsgeschwindigkeiten des zu dem Turbinenrad fließenden Wassers kommt es aufgrund des Bernoulli-Gesetzes zu einem starken Druckabfall und im Betrieb der Unterwasserturbine wird Gas bzw. Luft aus dem Gehäuse herausgesaugt. Kommt es zu einer starken Verminderung der Strömungsgeschwindigkeit, beispielsweise durch Änderungen der Einstellung von Leitschaufeln oder auch durch das Schließen eines eventuell vorhandenen Wehres, so steigt der statische Wasserdruck schnell an und es kann zu einem zu hohen Ansteigen des Wasserspiegels in dem Gehäuse kommen. Daher ergeben sich zum einen wechselnde Wasserstände im unteren Teil des Gehäuses und es besteht stets eine offene Wasserfläche gegenüber dem Innenraum des Gehäuses der Unterwasserturbine. Gleichzeitig entsteht durch den Generator eine nicht unerhebliche Abwärmemenge. Dies führt dazu, dass an der Gehäusewand, die stets von kaltem Wasser umspült ist, es zu Kondenswasserbildung kommen kann und auf Dauer zu Korrosion.

Bei dieser bekannten Art einer Unterwasserturbine besteht eine Ausführungsform darin, dass im oberen Teil des Gehäuses ein Generatorträger sich über den im wesentlichen gesamten Querschnitt des Gehäuses erstreckt, an dessen Unterseite der Generator befestigt ist. Dies führt jedoch dazu, dass nachteilig feuchte und durch den Generator erwärmte Luft aufsteigen kann und an der Innenseite des oberen Gehäuseabschlusses Kondenswasser entsteht.

Aus der DE 10 2006 043 946 A1 ist eine Unterwasserturbine mit einem abgedichteten Gehäuse bekannt, das ein komprimiertes Gaspolster einschließt und eine gegenüber dem Umgebungswasser nach unten offene Durchführung für die Turbinenwelle aufweist.

Der vorliegenden Erfindung liegt die Aufgabe zugrunde, bei einer Unterwasserturbine mit einem abgedichteten Gehäuse und gegenüber dem Umgebungswasser offenen Wellendurchgang Korrosion durch sich bildendes Kondenswasser zu verhindern.

Diese Aufgabe wird durch eine Unterwasserturbine mit den Merkmalen des Patentanspruchs 1 gelöst. Vorteilhafte Weiterbildungen und Ausgestaltungen der Erfindung sind in den Unteransprüchen angegeben.

Die Aufgabe wird erfindungsgemäß dadurch gelöst, dass bei einer Unterwasserturbine mit einem Gehäuse, in dem ein Generator angeordnet ist, mit einer Welle, die den Generator mit einem Turbinenlaufrad verbindet, wobei die Welle unter einem Winkel gegenüber der Horizontalen angeordnet ist und die Welle nach unten aus dem Gehäuse durch eine Wellenöffnung heraus geführt ist, so dass ein Eindringen des Wassers in das Gehäuse durch ein in dem Gehäuse komprimiertes Gasvolumen verhindert wird, mindestens über einen Teil der Innenoberfläche mindestens ein Isolierelement vorgesehen ist.

Dies verhindert den direkten Zutritt der durch den Betrieb des Generators erwärmten Luft, die wegen des Kontaktes mit der offenen Wasserfläche in hohem Maße mit Wasserdampf gesättigt ist und deshalb bei Kontakt mit der durch das umspülende Wasser abgekühlten Gehäusewand Kondenswasser bildet. Vorteilhaft wird durch die Erfindung die Dauerhaltbarkeit und Betriebszuverlässigkeit von Unterwasserturbinen mit offener Wellendurchführung verbessert.

Vorteilhaft ist die Welle senkrecht angeordnet.

Die erfindungsgemäße Lösung ist für alle Unterwasserturbinen geeignet, die letztlich eine zumindest nach unten geneigte Welle aufweisen, so dass eine Wellenöffnung an der tiefsten Stelle des Gehäuses angeordnet werden kann, wobei die Wellenöffnung keinen wasserdichten Abschluss etwa durch einen Radialwellendichtring aufweist.

In einer vorteilhaften Ausführungsform kann das Isolierelement aus einem gasdicht abgeschlossenen Hohlraum bestehen.

Dies stellt eine besonders einfache Möglichkeit dar, die gleichzeitig auch eine zuverlässige Isolierung für einen langen Zeitraum ermöglicht. Im Gegensatz zu etwa Schaumstoffen oder anderen Isoliermaterialien kann es nicht zu Alterungserscheinungen kommen. Beispielsweise kann so ein Hohlraum gebildet werden, indem eine weitere Innenwand vor die Gehäusewand gesetzt wird. Die in dem Hohlraum eingeschlossene Luft führt dann zu einer Isolierung, so dass die innere, vorgesetzte Innenwand eine höhere Temperatur durch die Wärme des Generators annimmt, so dass an dieser sich kein Kondenswasser bilden kann. Innerhalb des Hohlraums kann nur eine sehr beschränkte Menge an Wasser aus der eingeschlossenen Luft an der Gehäusewand auskondensieren und zu Korrosion führen, die jedoch wegen der geringen Menge unerheblich ist.

In einer Weiterbildung der Erfindung ist der Hohlraum an einem oberen Gehäuseabschluss ausgebildet.

In diesem Bereich wirkt sich eine Isolierung besonders vorteilhaft aus, da die durch den Generator erwärmte, feuchte Luft nach oben steigt.

Vorteilhaft erstreckt sich unterhalb des oberen Gehäuseabschlusses über den Querschnitt des Gehäuses ein Generatorträger, an dem der Generator gehalten ist, und der den oberhalb des Generatorträgers angeordneten Hohlraum gegenüber dem verbleibenden Gehäuse der Unterwasserturbine gasdicht abtrennt.

Der Generatorträger, der zur Befestigung des Generators dient, jedoch indirekt über die Welle auch die Turbine mit allen wirkenden Kräften abstützt, benötigt für eine Krafteinleitung in das Gehäuse eine breite Abstützungsbasis, bevorzugt über den gesamten Umfang des Gehäuses. Daher ist es eine einfache und kostengünstige Lösung, den Generatorträger so auszuführen, dass durch diesen der oberhalb gelegene Teil des Gehäuses als Hohlraum abgetrennt und abgedichtet werden kann.

Der obere Gehäuseabschluss kann mit dem Generatorträger durch eine umlaufende Schweißnaht verschweißt sein.

In einer weiteren Ausführungsform ist der obere Gehäuseabschluss gegenüber dem Generatorträger über einen O-Ring abgedichtet.

Dies ermöglicht für Service und Montage ein getrenntes Demontieren. Als sonstige statische Dichtungen kommen alle bekannten Verfahren und Materialien infrage, insbesondere elastische und Gummimaterialien als umlaufende Profilleiste, aber auch auf eine Dichtfläche aufgespritzte Dichtmaterialien.

In einer Weiterbildung der Erfindung können als Isolierelement flächig verklebte und die Gehäuseinnenwand gegenüber Zutritt von Wasser abdichtende Beschichtungen vorgesehen sein.

Dies bietet sich als Alternative oder zusätzliche Lösung an. Dabei können Isolierstoffe zum Einsatz kommen, die die Oberfläche der Gehäuseinnenwand gegenüber dem Zutritt von Wasser abdichten, beispielsweise als vollflächige Beschichtung oder vollflächig aufgeklebte Elemente.

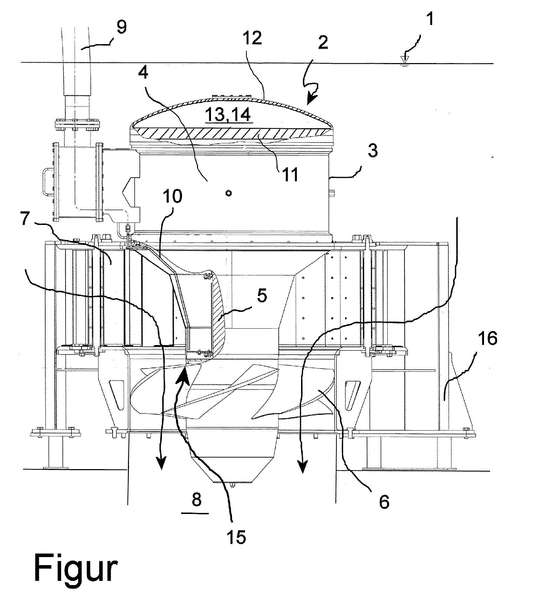

Weitere Vorteile und Einzelheiten der Erfindung werden anhand des in der schematischen Figur dargestellten Ausführungsbeispiels näher erläutert. Hierbei zeigt die Figur eine erfindungsgemäße Unterwasserturbine in einer teilweisen Schnittansicht.

Unterhalb eines Wasserspiegels 1 ist eine Unterwasserturbine 2 mit einem Gehäuse 3 angeordnet, wobei in einem oberen Teil 4 des Gehäuses ein nicht dargestellter Generator angeordnet ist, der über eine durch eine Wellenöffnung 15 geführte senkrechte Welle 5 mit einer Turbine bzw. genauer einem Turbinenlaufrad 6 verbunden ist. Die Unterwasserturbine 2 ist in einem Lagergestell bzw. Gestell 16 eingebaut und gelagert. Über radial angeordnete Leitschaufeln 7 wird das Wasser, wie durch die Pfeile verdeutlicht, auf das Turbinenlaufrad 6 geleitet und durch einen Saugschacht 8 in ein nicht dargestelltes Unterwasser abgeleitet. Über ein Anschlussrohr 9 ist die Unterwasserturbine 2 an elektrische Kabel zur Ableitung der erzeugten Energie angeschlossen. Über das Anschlussrohr 9 wird auch eine nicht dargestellte Gaszuleitung angeschlossen, über die Gas in den oberen Teil 4 des Gehäuses 3 gefüllt werden kann, um den Wasserspiegel unter einem zulässigen Niveau zu halten. Über das Anschlussrohr 9 wird auch eine Belüftungsleitung 10 angeschlossen, über die Luft an die Wellenöffnung 15 geführt werden kann, um Druckschwankungen auszugleichen.

Ein Generatorträger 11, unterhalb dessen der nicht dargestellter Generator befestigt ist, erstreckt sich über den gesamten oberen Querschnitt des Gehäuses 3. Oberhalb des Generatorträgers 11 ist ein oberer Gehäuseabschluss 12 angeordnet und durch eine umlaufende O-Ring-Dichtung mit diesem gasdicht verbunden. Der Generatorträger 11 und der Gehäuseabschluss 12 bilden einen luftdicht abgeschlossenen Hohlraum 13, der als Isolierelement 14 dient. Wenn feuchte, durch die Abwärme des Generators erwärmte Luft aufsteigt, so trifft sie nur auf den ebenfalls erwärmten Generatorträger 11 und nicht auf die durch das umgebende Wasser kalte Wand des Gehäuseabschlusses 12. Es kann sich daher kein Kondenswasser bilden und es wird ein Korrosionsschutz erreicht.

## Patentansprüche

1. Unterwasserturbine mit einem Gehäuse (3), in dem ein Generator angeordnet ist, mit einer Welle (5), die den Generator mit einem Turbinenlaufrad (6) verbindet, wobei die Welle (5) unter einem Winkel gegenüber der Horizontalen angeordnet ist und die Welle (5) nach unten aus dem Gehäuse durch eine Wellenöffnung (15) heraus geführt ist, so dass ein Eindringen des Wassers in das Gehäuse (3) durch ein in dem Gehäuse (3) komprimiertes Gasvolumen verhindert wird,
**dadurch gekennzeichnet,**
**dass** mindestens über einen Teil der Innenoberfläche mindestens ein Isolierelement vorgesehen ist, wobei die Innenoberfläche eine durch das umspülende Wasser abgekühlte Gehäusewand ist.

2. Unterwasserturbine nach Anspruch 1,
**dadurch gekennzeichnet,**
**dass** die Welle (5) senkrecht angeordnet ist.

3. Unterwasserturbine nach Anspruch 1 oder 2,
**dadurch gekennzeichnet,**
**dass** das Isolierelement aus einem gasdicht abgeschlossenen Hohlraum (13) besteht.

4. Unterwasserturbine nach Anspruch 3,
**dadurch gekennzeichnet,**
**dass** der Hohlraum (13) an einem oberen Gehäuseabschluss (12) ausgebildet ist.

5. Unterwasserturbine nach Anspruch 4,
**dadurch gekennzeichnet,**
**dass** sich unterhalb des oberen Gehäuseabschlusses (12) über den Querschnitt des Gehäuses (3) ein Generatorträger (11) erstreckt, an dem der Generator gehalten ist, und der den oberhalb des Generatorträgers (11) angeordneten Hohlraum (13) gegenüber dem verbleibenden Gehäuse (3) der Unterwasserturbine gasdicht abtrennt.

6. Unterwasserturbine nach Anspruch 5,
**dadurch gekennzeichnet,**
**dass** der obere Gehäuseabschluss (12) mit dem Generatorträger (11) durch eine umlaufende Schweißnaht verschweißt ist.

7. Unterwasserturbine nach Anspruch 5,
**dadurch gekennzeichnet,**
**dass** der obere Gehäuseabschluss (12) gegenüber dem Generatorträger (11) über einen O-Ring oder sonstige statische Dichtung abgedichtet ist.

8. Unterwasserturbine nach einem der Ansprüche 1 bis 7,
**dadurch gekennzeichnet,**
**dass** als Isolierelement flächig verklebte und die Gehäuseinnenwand gegenüber Zutritt von Wasser abdichtende Beschichtungen vorgesehen sind.

## Claims

1. Underwater turbine with a housing (3) in which a generator is arranged and with a shaft (5) which connects the generator to a turbine rotor (6), wherein the shaft (5) is arranged at an angle with respect to the horizontal and the shaft (5) is routed downwardly out of the housing through a shaft opening (15), with the result that water is prevented from penetrating into the housing (3) by a gas volume compressed in the housing (3),
**characterized in that**
at least one insulating element is provided at least over a part of the inner surface, wherein the inner surface is a housing wall which is cooled by the water which washes around.

2. Underwater turbine according to Claim 1,
**characterized in that**
the shaft (5) is arranged vertically.

3. Underwater turbine according to Claim 1 or 2,
**characterized in that**
the insulating element consist of a cavity (13) closed off in a gas-tight manner.

4. Underwater turbine according to Claim 3,
**characterized in that**
the cavity (13) is formed at an upper housing termination (12).

5. Underwater turbine according to Claim 4,
**characterized in that**
a generator carrier (11) extends over the cross section of the housing (3) below the upper housing termination (12), on which carrier the generator is held and which separates the cavity (13) arranged above the generator carrier (11) from the remaining housing (3) of the underwater turbine in a gas-tight manner.

6. Underwater turbine according to Claim 5,
**characterized in that**
the upper housing termination (12) is welded to the generator carrier (11) by a peripheral welding seam.

7. Underwater turbine according to Claim 5,
**characterized in that**
the upper housing termination (12) is sealed from the generator carrier (11) via an 0-ring or other static seal.

8. Underwater turbine according to one of Claims 1 to 7,
**characterized in that**
the insulating element provided takes the form of coatings which are adhesively bonded over their surface area and which seal the housing inner wall from ingress by water.

## Revendications

1. Turbine sous-marine équipée d'un carter (3) dans lequel un générateur est disposé, avec un arbre (5) reliant le générateur à un rotor de turbine (6), l'arbre (5) étant disposé selon un certain angle par rapport à l'horizontale et l'arbre (5) étant guidé vers le bas, hors du carter, à travers une ouverture d'arbre (15), de sorte que la pénétration de l'eau dans le carter (3) est empêchée par un volume de gaz comprimé dans le carter (3), **caractérisée en ce qu'**au moins un élément isolant est prévu au moins sur une partie de la surface intérieure, la surface intérieure étant une paroi de carter refroidie par l'eau l'entourant alentour.

2. Turbine sous-marine selon la revendication 1, **caractérisée en ce que** l'arbre (5) est disposé à la verticale.

3. Turbine sous-marine selon la revendication 1 ou 2, **caractérisée en ce que** l'élément isolant se composent d'une chambre creuse (13) fermée de façon étanche aux gaz.

4. Turbine sous-marine selon la revendication 3, **caractérisée en ce que** la chambre creuse (13) est réalisée au niveau d'une terminaison de carter (12) supérieure.

5. Turbine sous-marine selon la revendication 4, **caractérisée en ce qu'**un support de générateur (11) s'étend en dessous de la terminaison de carter (12) supérieure, par le biais de la section transversale du carter (3), le générateur étant maintenu au niveau dudit support et séparant de façon étanche aux gaz la chambre creuse (13) disposée au-dessus du support de générateur (11) par rapport au reste du carter (3) de la turbine sous-marine.

6. Turbine sous-marine selon la revendication 5, **caractérisée en ce que** la terminaison de carter (12) supérieure est soudée au support de générateur (11) par un joint de soudure périphérique.

7. Turbine sous-marine selon la revendication 5, **caractérisée en ce que** la terminaison de carter (12) supérieure est étanchéifiée par rapport au support de générateur (11) via un joint torique ou toute autre étanchéité statique.

8. Turbine sous-marine selon l'une quelconque des revendications 1 à 7, **caractérisée en ce que** des revêtements collés à plat et étanchéifiant la paroi de carter intérieure par rapport à l'entrée d'eau sont prévus pour l'élément isolant.
